# EUROPEAN PATENT SPECIFICATION

(11) **EP 2 076 687 B1**
(45) Date of publication and mention of the grant of the patent: **22.06.2011**
(21) Application number: 07872803.7
(22) Date of filing: 23.10.2007
(51) Int. Cl.: F16D 65/84, B60C 23/18

(54) **SEGMENTED HEAT SHIELD RETENTION**
FIXIERUNG EINES SEGMENTIERTEN WÄRMESCHILDS
FIXATION D'UN BOUCLIER THERMIQUE SEGMENTÉ

(30) Priority: 23.10.2006 US 862570 P
(43) Date of publication of application: 08.07.2009
(73) Proprietor: Goodrich Corporation, Charlotte, NC 28217-4578 (US)
(72) Inventor: CAMPBELL, Steven, Charles, Troy, OH 45373 (US)
(74) Representative: Hargreaves, Timothy Edward
(86) International application number: PCT/US2007/082200
(87) International publication number: WO 2008/097386

(56) References cited:
- EP-A- 1 304 240
- US-A- 3 051 528
- US-A- 4 017 123

## Description

### Field of the Invention

The invention herein described relates to aircraft wheel and brake assemblies and, more particularly, to improvements in heat shields and heat shield support structures.

### Background of the invention

An aircraft wheel and brake assembly typically includes a heat shield disposed between the wheel and brake disks to prevent conduction and radiation to the aircraft wheel of heat energy generated in the brake disks during braking. Excessive temperatures In the aircraft wheel can damage the wheel and the aircraft tire. The heat shield also prevents hot brake material ejected from the brake disks during braking from being slung against the inside of the wheel, which can also damage the wheel and further contribute to excessive temperatures.

An early example of a heat shield is described by U.S. Pat. No. 3,051,528 issued in 1962 to R. R. Rogers. The Rogers heat shield comprises a multitude of curved heat shield segments disposed between adjacent drive keys. More recent examples are described by U.S. Pat. No. 4,017,123 issued in 1977 to Homer et al. and U.S. Pat. No. 4,084,857 issued in 1978 to VanderVeen. These heat shields also comprise curved heat shield segments disposed between adjacent drive keys. The Homer et al. heat shield segments are captive between the drive key caps and ledges formed on the drive keys. The ledges and drive keys are integrally formed with the wheel, which is typical of wheel and brake assemblies having steel disks. Horner et al. states that the heat shield segments could be used with the removable keys presented in Rogers. However, exactly how this would be accomplished is not clear because the Rogers drive keys do not have ledges or drive key caps. The VanderVeen heat shield section is captive between the drive key cap and an additional cap having a pair of wings that extend from either side of the drive key. The drive keys are integrally formed with the wheel, and wings eliminate the need for the ledges of Horner et al. The heat shields described thus far are representative of the technology developed for wheel and brake assemblies having steel brake disks with metallic friction linings.

The advent of carbon/carbon brake disks instigated further development of heat shields. Carbon/carbon brakes generally operate at a much higher temperature than their steel counter-parts, which necessitated further steps to minimize conduction and radiation of heat energy into the aircraft wheel. Most wheel and brake assemblies having carbon/carbon brakes now have removable torque bars that are spaced from the inside of the aircraft wheel, with attachments at both ends. This arrangement minimizes the conductive path from the torque bars to the wheel. Heat shield contact with the torque bars is preferably minimized for the same reasons. In addition, radiation is a major source of heat transfer from carbon/carbon brakes, which necessitates that the heat shield fully encircle the brake disks with minimum holes or breaks that permit direct radiation of heat energy to the aircraft wheel. Conduction is another major source of heat transfer in carbon/carbon brakes, which is minimized by minimizing contact of the torque bars and heat shield with the aircraft wheel. These considerations caused a significant departure from the earlier heat shield technology developed for steel brakes.

According to one prior art approach, a single piece full circle heat shield is attached to the wheel and brake assembly between the wheel and the torque bars. The heat shield is spaced from both the torque bars and the aircraft wheel in order to minimize heat conduction to the heat shield from the torque bars. The heat shield comprises two cylindrical stainless steel sheets spaced from each other, with insulation in between. A heat shield constructed in such manner, though certainly safe and effective, embodies some undesirable characteristics. For example, the shield tends to warp and buckle during use due to thermal expansion and contraction induced by braking cycles. In addition, removing a damaged heat shield generally requires removing all the torque bars from the aircraft wheel assembly.

Further heat shield improvements are described in U.S. Pat. No. 5,851,056 issued in 1998 to Hyde. The Hyde heat shield comprises individual heat shield segments disposed between adjacent torque bars and elongate heat shield carriers superposing the torque bars and engaging the heat shield segments. With such an arrangement, the heat shield segments are removable without loosening or removing any torque bars.

Although the Hyde heat shield is an effective heat shield, it and similarly designed heat shields exhibit undesirable characteristics. Since the wheel acts as part of the pressure vessel to contain tire pressure, there is limited structure to which the heat shield segments and carriers can be mounted. For example, the heat shield sections and carriers of the Hyde heat shield are mounted at their axially inboard ends to the wheel flange and extend axially into the tube well. To provide support deep within the tube well, the heat shield carriers include resilient bumpers at their axially outboard ends. The resilient bumpers contact the tube well and restrain radial movement of the heat shield carriers and also the heat shield sections engaged by the carriers. During wheel spin up, the heat shield sections and carriers are forced radially outwardly and the resilient bumpers protect the tube well from being scored. However, over time the resilient bumpers have a tendency to degrade, which may cause the heat shield sections and/or carriers to contact and/or abrade the protective coatings of the tube well. Once the protective coating is removed, the wheel is susceptible to corrosion which can lead to the wheel being prematurely removed from service. EP 1 304 240 describes a heat shield assembly for a wheel and brake assembly that includes one or more torque bars that include a coupling device which co-operates with a portion of the heat shield at a location axially outwardly remote from the inboard end of the heat shield.

While the prior art heat shield designs are certainly effective, they typically require additional parts, are difficult to assemble, and/or are difficult to service without disassembly of at least a portion of the wheel.

### Summary of the Invention

The present invention provides a heat shield assembly for a wheel and brake assembly wherein the heat shield is securable to the wheel and brake assembly via one or more slots formed in a torque bar. The slots secure the heat shield against radial and circumferential movement. The heat shield can be axially inserted and removed from the wheel and brake assembly without removal of the torque bars.

According to one aspect of the invention, a wheel and brake assembly comprises a wheel having an axis of rotation and including a tube well having an inboard end and outboard end, and at least one torque bar attached to the tube well for transferring torque from the wheel to brake components located radially inwardly of the tube well. The torque bar includes a slot on a circumferential side thereof. A heat shield is disposed radially inwardly of the tube well and includes edge portions received within the slot in the torque bar. The slot restrains radial and circumferential movement of the heat shield while permitting axial movement of the heat shield.

More particularly, the torque bar has an inboard slot and an outboard slot for receiving the edge portion of the heat shield. Each torque bar can further include a slot intermediate the inboard slot and the outboard slot. The heat shield can include a plurality of circumferentially arranged heat shield sections, each heat shield section having edge portions received within the at least one slot of a respective circumferentially adjacent torque bar. The edge portion of the heat shield can include a radially inwardly turned edge portion that can be L-shape, with a distal leg of the L-shape portion corresponding in width to a radial width of the slot.

According to another aspect of the invention, a heat shield and torque bar assembly for a wheel and brake assembly comprises a plurality of heat shield sections, each section having edge portions on respective opposite circumferential sides thereof, and a plurality of torque bars attachable to a tube well for transferring torque from the wheel to brake components located radially inwardly of the tube well. Each torque bar includes a slot on a circumferential side thereof for retaining an edge portion of a respective heat shield so as to restrain radial and circumferential movement of the heat shield while permitting axial movement of the heat shield.

According to a further aspect of the invention, a torque bar for a wheel and brake assembly comprises an elongated bar and at least one slot for retaining an edge portion of a heat shield section when the torque bar is installed in a wheel and brake assembly.

Further features of the invention will become apparent from the following detailed description when considered in conjunction with the drawings.

### Brief Description of the Drawings

Fig. 1 is a cross-sectional view of a wheel and brake assembly employing a heat shield assembly in accordance with the invention.
Fig. 2 is an arcuate portion of a front/inboard end view of the wheel and brake assembly of Fig. 1, looking into the wheel from the left side of Fig. 1.
Fig. 3A is a perspective view of a torque bar used in the wheel and brake assembly of Fig. 1.
Fig. 3B is a top view of the torque bar.
Fig. 3C is a longitudinal cross-sectional view of the torque bar taken along the line 3C-3C of Fig. 3B.
Fig. 3D is an end view of the torque bar as viewed from the line 3D-3D of Fig. 3B.
Fig. 4 is a perspective view of a heat shield section of the heat shield.
Fig. 5 is a perspective view of the torque bar of Figs. 3A-3D and an adjacent heat shield section, as viewed from the axially outboard side.
Fig. 6 is a perspective view of the torque bar and heat shield section of Fig. 5, as viewed from the axially inbound side.

### Detailed Description

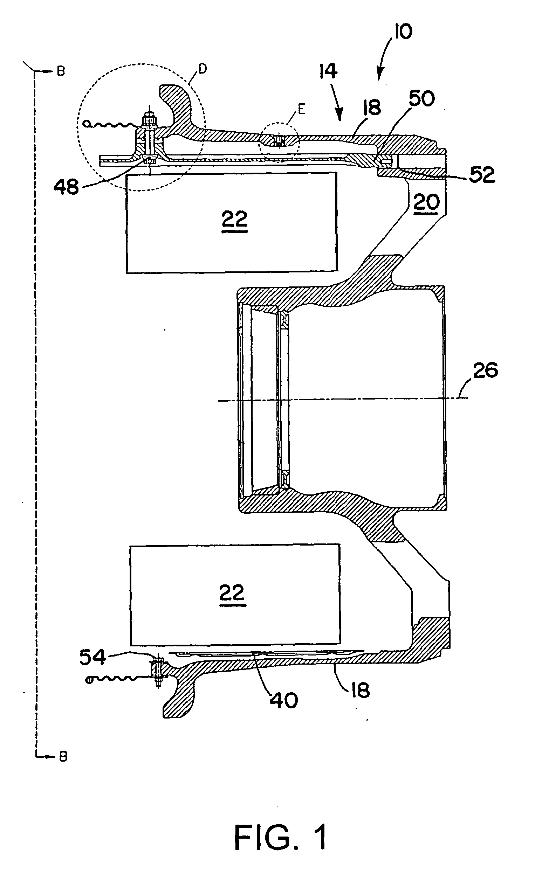

Referring now to the drawings in detail and initially to Figs. 1-2, an exemplary wheel and brake assembly in accordance with the invention is indicated generally by reference numeral 10. The aircraft wheel and brake assembly 10 is mountable on an aircraft bogie axle (not shown).

The wheel and brake assembly 10 comprises a wheel 14 (only one wheel-half shown for clarity) having a hub 16 and a tube well 18 concentric with the hub 16, and a web 20 interconnecting the hub 16 and the tube well 18. A torque take-out assembly (e.g., brake components) shown schematically at reference numeral 22 is aligned with the hub 16, and the wheel 14 is rotatable relative to the torque take-out assembly 22.

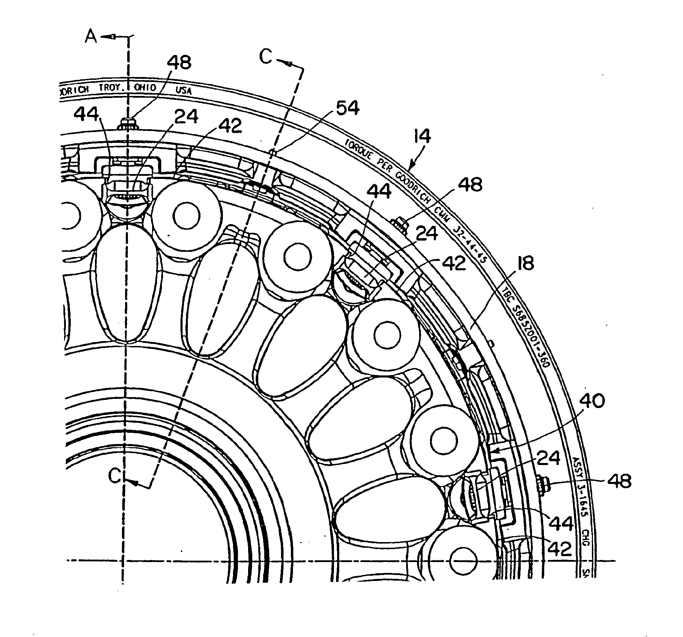

As shown in Fig. 2, a plurality of torque bars 24 are fixed to the wheel 14 generally parallel to the axis of rotation 26 of the wheel and spaced from the tube well 18. As will be appreciated, the torque take-out assembly 22 may include a heat sink which may comprise brake or friction disks in the form of rotors and stators. The rotors typically would be engaged with the torque bars 24 for rotation with the wheel, and the stators would be engaged with the torque take-out assembly 22 which is fixed against rotation relative to a landing gear strut (not shown). An actuator can be provided to compress the heat sink in a conventional manner.

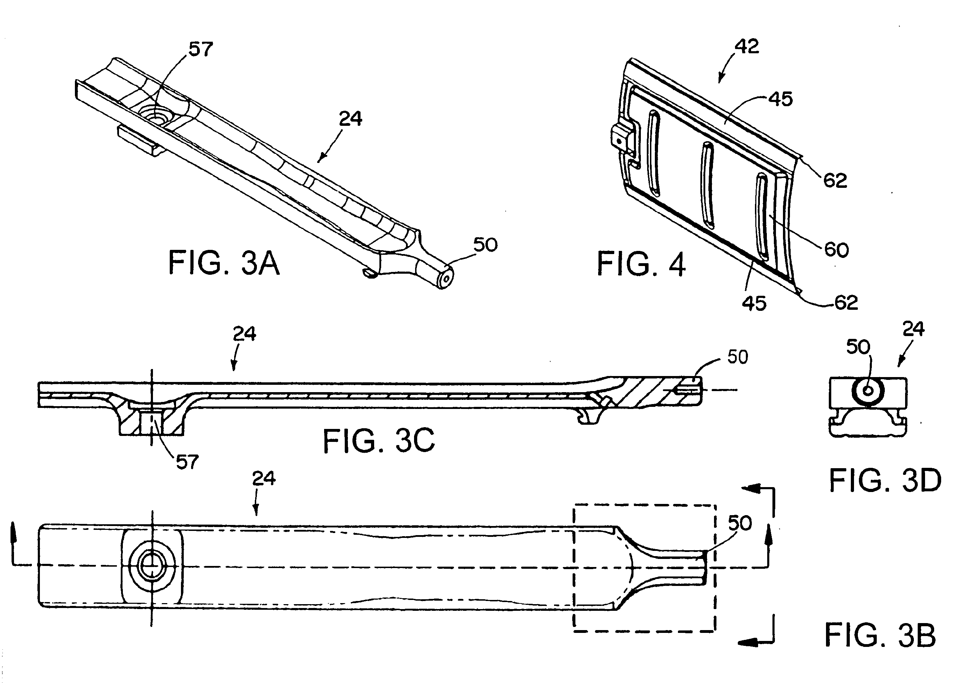

A heat shield 40, according to one aspect of the invention, is attached to the wheel 14 between the tube well 18 and the torque take-out assembly 22. As illustrated in Figs. 1 and 2, the heat shield 40 is concentric with the tube well 18 and has a plurality of heat shield sections (also called segments) 42 disposed between respective, relatively adjacent pairs of torque bars 24. The heat shield sections 42 are spaced from the tube well 18 and secured in place by one or more slots 44 in the torque bars 24. The one or more slots 44, as will be described in more detail below, are disposed along a circumferential edge of the torque bar 24 and configured to receive an edge portion 45 of a heat shield section 42. Two or more slots 44, such as outboard slots 44a and inboard slots 44b (see Figs. 3A-3D), can be spaced apart axially along the length of the torque bar 24 for receiving the edge portion of the heat shield section in more than one location. The slots 44 are shaped and/or sized for axially receiving and radially and circumferentially constraining the edge portions 45 of the heat shield segments 42, as described below with greater particularity.

The torque bars 24 are attached at their axially inboard end to the wheel 14 by torque bar bolts 48. The torque bar bolts 48 extend through respective holes in a flange provided on the wheel as shown, which flange for purposes of the present description is intended to be considered as part of the tube well. Each torque bar 24 preferably has a pin 50 at its axially outboard end (i.e., the end opposite the torque bar bolts 48) that is received within a hole 52 in the web 20 of the wheel.

After axial insertion between respective pairs of torque bars 24, the heat shield sections 42 may be secured in place to the tube well 18 by suitable means, such as fasteners, and more particularly heat shield bolts 54 (Figs. 1 and 2). Other securement devices may also be employed.

Turning to Figs. 3A-3D, details of an exemplary torque bar 24 are shown. Each torque bar 24 is substantially rectangular-shaped in cross-section (Fig. 3D) and has a mounting hole 57 at its axially inboard end that receives the torque bar bolt 48. Each torque bar 24 also includes, on opposite circumferential edges, a pair of slots 44a and 44b, with slots 44a being outboard slots and slots 44b being inboard slots. As mentioned, the slots 44a and 44b are adapted to axially receive an edge portion of a heat shield segment 42. The outboard slots 44a and inboard slots 44b are spaced apart axially along the length of the torque bar 24, with the outboard slots 44a having a shorter axial length than the inboard slots 44b. As best shown in Figs. 3A and 3D, the illustrated slots 44a and 44b extend radially outwardly from the body of the torque bar 24 and are generally u-shape in cross section for receiving the edge of a heat shield segment 42. It will be appreciated that any suitable number of slots can be provided on a given circumferential edge, and the axial length of the slots can vary. For example, a single slot could be provided that extends substantially the entire length of the torque bar 24. Further, an intermediate slot could be provided between outboard slot 44a and inboard slot 44b. The structure forming the slots 44a and 44b and the torque bar 24 can be a unitary member (e.g., the slots 44a and 44b are formed in the torque bar 24) or the slots 44a and 44b can be formed by separate members secured to the torque bar 24.

Turning to Fig. 4, an exemplary heat shield segment 42 is illustrated. The heat shield segment 42 includes a relatively thick central portion and edge portions 45 circumferentially adjacent the central portion 60 configured to be inserted into slots 44 in the torque bar 24. The edge portions 45 include an L-shape portion 62 wherein a distal leg of the L-shape portion is turned radially inwardly. The distal leg of the L-shape portion 62 corresponds in width to a radial width of the slots 44a and 44b.

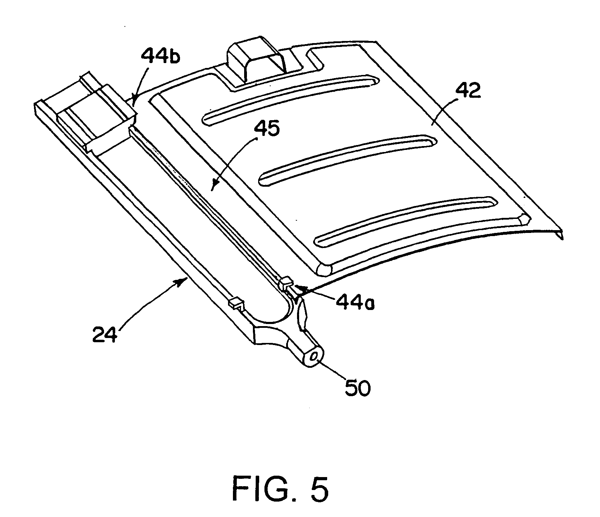

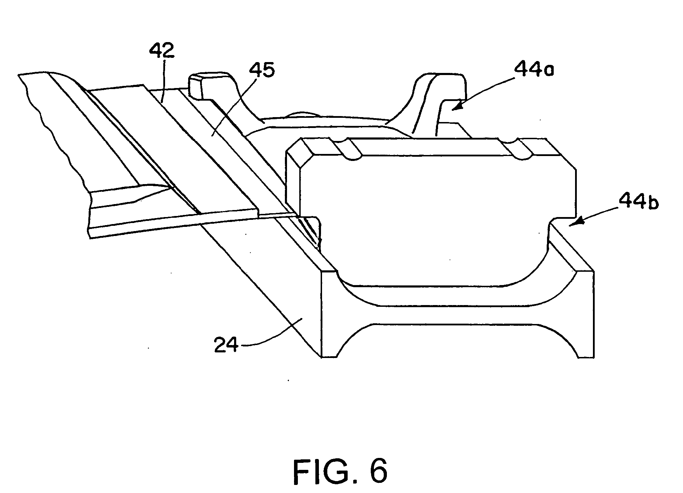

Turning to Figs. 5 and 6, the torque bar 24 is illustrated with an edge portion 45 of a heat shield segment 42 received within slots 44a and 44b. As best seen in Fig. 6, the heat shield segment 42 is restrained radially and circumferentially by slots 44a and 44b of torque bar 24. As mentioned, heat shield bolt 54 secures the heat shield segment 42 in place and prevents axial movement thereof.

It will be appreciated that the heat shield sections 42 may be damaged such that replacement is needed before scheduled maintenance of the wheel and brake assembly. If this occurs, one or more damaged heat shield sections 42 may be replaced by removing the heat shield bolts 54 for those sections, axially withdrawing the damaged sections from the wheel and heat assembly, inserting new heat shield sections 42, and replacing the heat shield bolts 54. This may be accomplished without removing the torque bars 24, thus greatly facilitating field repair of the heat shield 40.

It will be appreciated that the heat shield and torque bar assembly set forth above not only can be serviced without removing the torque bars 24, but also has relatively few parts compared to other prior art designs while providing comparable functionality and/or performance.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A torque bar (24) for a wheel and brake assembly (10), comprising an elongated bar, and **characterised in that**:-
the torque bar comprises a slot (44) for retaining an edge portion (45) of a heat shield section (42) when the torque bar (24) is installed in a wheel and brake assembly (10).

2. The torque bar (24) as set forth in claim 1, further comprising a second slot (44) spaced apart along the length of the torque bar (24) for retaining an edge portion (45) of a heat shield section (42) when the torque bar (24) is installed in a wheel and brake assembly (10).

3. The torque bar (24) as set forth in claim 1, wherein the structure of the torque bar (24) and the slot (44) is unitary.

4. The torque bar (24) as set forth in claim 2, wherein the structure of the torque bar (24) and the slot (44) is unitary.

5. A heat shield and torque bar assembly for a wheel and brake assembly (10) comprising:
a plurality of heat shield sections (42), each section having edge portions (45) on respective opposite circumferential sides thereof; and
a plurality of torque bars (24) as set forth in claim 1, attachable to a tube well (18) for transferring torque from the wheel to brake components located radially inwardly of the tube well (18).

6. The heat shield and torque bar assembly as set forth in claim 5, wherein the torque bars (24) have an inboard slot (44b) and an outboard slot (44a) for receiving an edge portion (45) of a heat shield section (42).

7. The heat shield and torque bar assembly as set forth in claim 5, wherein the edge portions (45) of the heat shield sections (42) include a radially inwardly turned edge portion (45), in particular an L-shape radially inwardly turned edge portion (45) wherein a distal leg of the radially inwardly turned edge portion (45) corresponds in width to a radial width of the slot (44).

8. The heat shield and torque bar assembly as set forth in claim 6, wherein the edge portions (45) of the heat shield sections (42) include a radially inwardly turned edge portion (45), in particular an L-shape radially inwardly turned edge portion (45) wherein a distal leg of the radially inwardly turned edge portion (45) corresponds in width to a radial width of the slot (44).

9. A wheel and brake assembly (10) comprising
a wheel (14) having an axis of rotation and including a tube well (18) having an inboard end and outboard end,
wherein the wheel and brake assembly (10) comprises the torque bar (24) as set forth in claim 1, attached to the tube well (18) for transferring torque from the wheel to brake components located radially inwardly of the tube well (18)
a heat shield (40) disposed radially inwardly of the tube well (18), the heat shield (40) including an edge portion (45) received within the slot (44),
whereby the slot (44) restrains radial and circumferential movement of the heat shield (40) while permitting axial movement of the heat shield (40).

10. The wheel and brake assembly (10) as set forth in claim 9, wherein the torque bar (24) has an inboard slot (44b) and an outboard slot (44a) for receiving the edge portion (45) of the heat shield (40).

11. The wheel and brake assembly (10) as set forth in claim 9, wherein the heat shield (40) includes a plurality of circumferentially arranged heat shield sections (42), each heat shield section (42) having edge portions (45) received within the slots (44) of respective circumferentially adjacent torque bars (24), wherein the slots (44) of respective torque bars (24) retain respective edge portions (45) of each heat shield section (42) so as to restrain radial and circumferential movement while permitting axial movement of the heat shield section (42).

12. The wheel and brake assembly (10) as set forth in claim 9, wherein the edge portion (45) of the heat shield section (42) includes a radially inwardly turned edge portion (45), in particular an L-shape radially inwardly turned edge portion (45) wherein a distal leg of the radially inwardly turned edge portion (45) corresponds in width to a radial width of the slot (44).

13. The wheel and brake assembly (10) as set forth in claim 7, wherein the structure of the torque bar (24) and the slot (44) is unitary.

14. The wheel and brake assembly (10) as set forth in claim 10, wherein the heat shield (40) includes a plurality of circumferentially arranged heat shield sections (42), each heat shield section (42) having edge portions (45) received within the slots (44) of respective circumferentially adjacent torque bars (24), wherein the slots (44) of respective torque bars (24) retain respective edge portions (45) of each heat shield section (42) so as to restrain radial and circumferential movement while permitting axial movement of the heat shield section (42).

15. The wheel and brake assembly (10) as set forth in claim 11, wherein the edge portion (45) of the heat shield section (42) includes a radially inwardly turned edge portion (45), in particular an L-shape radially inwardly turned edge portion (45) wherein a distal leg of the radially inwardly turned edge portion (45) corresponds in width to a radial width of the slot (44).

## Patentansprüche

1. Drehstab (24) für eine Baugruppe (10) aus Rad und Bremse, der einen länglichen Stab umfasst, und **dadurch gekennzeichnet, dass**:
der Drehstab einen Schlitz (44) umfasst, um einen Kantenabschnitt (45) einer Hitzeschildsektion (42) festzuhalten, wenn der Drehstab (24) in einer Baugruppe (10) aus Rad und Bremse eingebaut ist.

2. Drehstab (24) nach Anspruch 1, der ferner einen zweiten Schlitz (44) umfasst, der mit Zwischenraum längs der Länge des Drehstabes (24) angeordnet ist, um einen Kantenabschnitt (45) einer Hitzeschildsektion (42) festzuhalten, wenn der Drehstab (24) in einer Baugruppe (10) aus Rad und Bremse eingebaut ist.

3. Drehstab (24) nach Anspruch 1, wobei die Struktur des Drehstabes (24) und des Schlitzes (44) einteilig ist.

4. Drehstab (24) nach Anspruch 2, wobei die Struktur des Drehstabes (24) und des Schlitzes (44) einteilig ist.

5. Baugruppe aus Hitzeschild und Drehstab für eine Baugruppe (10) aus Rad und Bremse, die Folgendes umfasst:
mehrere Hitzeschildsektionen (42), wobei jede Sektion Kantenabschnitte (45) an jeweiligen entgegengesetzten Umfangsseiten derselben hat, und
mehrere Drehstäbe (24) nach Anspruch 1, die an einem Schlauchbett (18) angebracht werden können, um ein Drehmoment von dem Rad zu Bremsenbauteilen zu übertragen, die in Radialrichtung von dem Schlauchbett (18) nach innen angeordnet sind.

6. Baugruppe aus Hitzeschild und Drehstab nach Anspruch 5, wobei die Drehstäbe (24) einen nach innen gerichteten Schlitz (44b) und einen nach außen gerichteten Schlitz (44a) haben, um einen Kantenabschnitt (45) einer Hitzeschildsektion (42) aufzunehmen.

7. Baugruppe aus Hitzeschild und Drehstab nach Anspruch 5, wobei die Kantenabschnitte (45) der Hitzeschildsektionen (42) einen in Radialrichtung nach innen gewendeten Kantenabschnitt (45), insbesondere einen L-förmigen in Radialrichtung nach innen gewendeten Kantenabschnitt (45), einschließen, wobei ein distaler Schenkel des einen in Radialrichtung nach innen gewendeten Kantenabschnitts (45) in der Breite einer radialen Breite des Schlitzes (44) entspricht.

8. Baugruppe aus Hitzeschild und Drehstab nach Anspruch 6, wobei die Kantenabschnitte (45) der Hitzeschildsektionen (42) einen in Radialrichtung nach innen gewendeten Kantenabschnitt (45), insbesondere einen L-förmigen in Radialrichtung nach innen gewendeten Kantenabschnitt (45), einschließen, wobei ein distaler Schenkel des einen in Radialrichtung nach innen gewendeten Kantenabschnitts (45) in der Breite einer radialen Breite des Schlitzes (44) entspricht.

9. Baugruppe (10) aus Rad und Bremse, die Folgendes umfasst:
ein Rad (14), das eine Drehachse hat und ein Schlauchbett (18) einschließt, das ein nach innen gerichtetes Ende und ein nach außen gerichtetes Ende hat,
wobei die Baugruppe (10) aus Rad und Bremse den Drehstab (24) nach Anspruch 1 umfasst, der an dem Schlauchbett (18) angebracht ist, um ein Drehmoment von dem Rad zu Bremsenbauteilen zu übertragen, die in Radialrichtung von dem Schlauchbett (18) nach innen angeordnet sind,
einen Hitzeschild (40), der in Radialrichtung von dem Schlauchbett (18) nach innen angeordnet ist, wobei der Hitzeschild (40) einen Kantenabschnitt (45) einschließt, der innerhalb des Schlitzes (44) aufgenommen wird,
wodurch der Schlitz (44) die radiale und die umlaufende Bewegung des Hitzeschildes (40) einschränkt, während er eine axiale Bewegung des Hitzeschildes (40) ermöglicht.

10. Baugruppe (10) aus Rad und Bremse nach Anspruch 9, wobei der Drehstab (24) einen nach innen gerichteten Schlitz (44b) und einen nach außen gerichteten Schlitz (44a) hat, um den Kantenabschnitt (45) des Hitzeschildes (40) aufzunehmen.

11. Baugruppe (10) aus Rad und Bremse nach Anspruch 9, wobei der Hitzeschild (40) mehrere umlaufend angeordnete Hitzeschildsektionen (42) einschließt, wobei jede Hitzeschildsektion (42) Kantenabschnitte (45) hat, die innerhalb der Schlitze (44) von jeweiligen umlaufend benachbarten Drehstäben (24) aufgenommen werden, wobei die Schlitze (44) der jeweiligen Drehstäbe (24) jeweilige Kantenabschnitte (45) jeder Hitzeschildsektion (42) festhalten, um so die radiale und die umlaufende Bewegung einzuschränken, während eine axiale Bewegung der Hitzeschildsektion (42) ermöglicht wird.

12. Baugruppe (10) aus Rad und Bremse nach Anspruch 9, wobei der Kantenabschnitt (45) der Hitzeschildsektion (42) einen in Radialrichtung nach innen gewendeten Kantenabschnitt (45), insbesondere einen L-förmigen in Radialrichtung nach innen gewendeten Kantenabschnitt (45), einschließt, wobei ein distaler Schenkel des einen in Radialrichtung nach innen gewendeten Kantenabschnitts (45) in der Breite einer radialen Breite des Schlitzes (44) entspricht.

13. Baugruppe (10) aus Rad und Bremse nach Anspruch 7, wobei die Struktur des Drehstabes (24) und des Schlitzes (44) einteilig ist.

14. Baugruppe (10) aus Rad und Bremse nach Anspruch 10, wobei der Hitzeschild (40) mehrere umlaufend angeordnete Hitzeschildsektionen (42) einschließt, wobei jede Hitzeschildsektion (42) Kantenabschnitte (45) hat, die innerhalb der Schlitze (44) von jeweiligen umlaufend benachbarten Drehstäben (24) aufgenommen werden, wobei die Schlitze (44) der jeweiligen Drehstäbe (24) jeweilige Kantenabschnitte (45) jeder Hitzeschildsektion (42) festhalten, um so die radiale und die umlaufende Bewegung einzuschränken, während eine axiale Bewegung der Hitzeschildsektion (42) ermöglicht wird.

15. Baugruppe (10) aus Rad und Bremse nach Anspruch 11, wobei der Kantenabschnitt (45) der Hitzeschildsektion (42) einen in Radialrichtung nach innen gewendeten Kantenabschnitt (45), insbesondere einen L-förmigen in Radialrichtung nach innen gewendeten Kantenabschnitt (45), einschließt, wobei ein distaler Schenkel des einen in Radialrichtung nach innen gewendeten Kantenabschnitts (45) in der Breite einer radialen Breite des Schlitzes (44) entspricht.

## Revendications

1. Barre de couple (24) pour un assemblage de roue et de frein (10), comprenant une barre allongée, et **caractérisée en ce que** :
la barre de couple comprend une fente (44) pour retenir une partie de bordure (45) d'une section de bouclier thermique (42) lorsque la barre de couple (24) est installée dans un assemblage de roue et de frein (10).

2. Barre de couple (24) selon la revendication 1, comprenant en outre une deuxième fente (44) espacée le long de la longueur de la barre de couple (24) pour retenir une partie de bordure (45) d'une section de bouclier thermique (42) lorsque la barre de couple (24) est installée dans un assemblage de roue et de frein (10).

3. Barre de couple (24) selon la revendication 1, dans laquelle la structure de la barre de couple (24) et la fente (44) sont formées d'une seule pièce.

4. Barre de couple (24) selon la revendication 2, dans laquelle la structure de la barre de couple (24) et la fente (44) sont formées d'une seule pièce.

5. Assemblage de bouclier thermique et de barre de couple pour un assemblage de roue et de frein (10), comprenant :
plusieurs sections de bouclier thermique (42), chaque section comportant des parties de bordure (45) sur ses côtés circonférentiels opposés respectifs ; et
plusieurs barres de couple (24) selon la revendication 1, pouvant être fixées sur un puits tubé (18), pour transférer le couple de la roue vers des composants de frein agencés radialement vers l'intérieur du puits tubé (18).

6. Assemblage de bouclier thermique et de barre de couple selon la revendication 5, dans lequel les barres de couple (24) comportent une fente intérieure (44b) et une fente extérieure (44a) pour recevoir une partie de bordure (45) d'une section de bouclier thermique (42).

7. Assemblage de bouclier thermique et de barre de couple selon la revendication 5, dans lequel les parties de bordure (45) des sections de bouclier thermique (42) englobent une partie de bordure tournée radialement vers l'intérieur (45), en particulier une partie de bordure tournée radialement vers l'intérieur en forme de L (45), une branche distale de la partie de bordure tournée radialement vers l'intérieur (45) ayant une largeur correspondant à une largeur radiale de la fente (44).

8. Assemblage de bouclier thermique et de barre de couple selon la revendication 6, dans lequel les parties de bordure (45) des sections de bouclier thermique (42) englobent une partie de bordure tournée radialement vers l'intérieur (45), en particulier une partie de bordure tournée radialement vers l'intérieur en forme de L (45), une branche distale de la partie de bordure tournée radialement vers l'intérieur (45) ayant une largeur correspondant à une largeur radiale de la fente (44).

9. Assemblage de roue et de frein (10), comprenant
une roue (14) comportant un axe de rotation et englobant un puits tubé (18) comportant une extrémité intérieure et une extrémité extérieure ;
l'assemblage de roue et de frein (10) comprenant la barre de couple (24) selon la revendication 1, fixée sur le puits tubé (18), pour transférer le couple de la roue vers des composants de frein agencés radialement vers l'intérieur du puits tubé (18) ;
un bouclier thermique (40), agencé radialement vers l'intérieur du puits tubé (18), le bouclier thermique (40) englobant une partie de bordure (45) reçue dans la fente (44) ;
la fente (44) empêchant ainsi un déplacement radial et circonférentiel du bouclier thermique (40), tout en permettant un déplacement axial du bouclier thermique (40).

10. Assemblage de roue et de frein (10) selon la revendication 9, dans lequel la barre de couple (24) comporte une fente intérieure (44b) et une fente extérieure (44a) pour recevoir la partie de bordure (45) du bouclier thermique (40).

11. Assemblage de roue et de frein (10) selon la revendication 9, dans lequel le bouclier thermique (40) englobe plusieurs sections de bouclier thermique à agencement circonférentiel (42), chaque section de bouclier thermique (42) comportant des parties de bordure (45) reçues dans les fentes (44) des barres de couple circonférentiellement adjacentes correspondantes (24), les fentes (44) des barres de couple respectives (24) retenant les parties de bordure respectives (45) de chaque section de bouclier thermique (42), de sorte à empêcher un déplacement radial et circonférentiel, tout en permettant un déplacement axial de la section de bouclier thermique (42).

12. Assemblage de roue et de frein (10) selon la revendication 9, dans lequel la partie de bordure (45) de la section de bouclier thermique (42) englobe une partie de bordure tournée radialement vers l'intérieur (45), en particulier une partie de bordure tournée radialement vers l'intérieur en forme de L (45), une branche distale de la partie de bordure tournée radialement vers l'intérieur (45) ayant une largeur correspondant à la largeur radiale de la fente (44).

13. Assemblage de roue et de frein (10) selon la revendication 7, dans lequel la structure de la barre de couple (24) et la fente (44) sont formées d'une seule pièce.

14. Assemblage de roue et de frein (10) selon la revendication 10, dans lequel le bouclier thermique (40) englobe plusieurs sections de bouclier thermique à agencement circonférentiel (42), chaque section de bouclier thermique (42) comportant des parties de bordure (45) reçues dans les fentes (44) des barres de couple circonférentiellement adjacentes respectives (24), les fentes (44) des barres de couple respectives (24) retenant les parties de bordure respectives (45) de chaque section de bouclier thermique (42), de sorte à empêcher un déplacement radial et circonférentiel, tout en permettant un déplacement axial de la section de bouclier thermique (42).

15. Assemblage de roue et de frein (10) selon la revendication 11, dans lequel la partie de bordure (45) de la section de bouclier thermique (42) englobe une partie de bordure tournée radialement vers l'intérieur (45), en particulier une partie de bordure tournée radialement vers l'intérieur en forme de L (45), une branche distale de la partie de bordure tournée radialement vers l'intérieur (45) ayant une largeur correspondant à la largeur radiale de la fente (44).
